# EUROPÄISCHE PATENTSCHRIFT

(11) **EP 3 509 919 B1**
(45) Veröffentlichungstag und Bekanntmachung des Hinweises auf die Patenterteilung: **27.05.2020**
(21) Anmeldenummer: 17761894.9
(22) Anmeldetag: 06.09.2017
(51) Int. Cl.: B60T 8/36

(54) **HYDRAULIKBLOCK FÜR EIN HYDRAULIKAGGREGAT EINER SCHLUPFREGELUNG EINER HYDRAULISCHEN FAHRZEUGBREMSANLAGE**
HYDRAULIC BLOCK FOR A HYDRAULIC ASSEMBLY OF A SLIP CONTROL SYSTEM OF A HYDRAULIC VEHICLE BRAKE SYSTEM
BLOC HYDRAULIQUE POUR UN GROUPE HYDRAULIQUE D'UNE RÉGULATION ANTIPATINAGE D'UN SYSTÈME DE FREINAGE HYDRAULIQUE D'UN VÉHICULE

(30) Priorität: 07.09.2016 DE 102016216969; 21.12.2016 DE 102016225757
(43) Veröffentlichungstag der Anmeldung: 17.07.2019
(73) Patentinhaber: Robert Bosch GmbH, 70442 Stuttgart (DE)
(72) Erfinder: ZANDER, Thomas, 88085 Langenargen (DE); LOEFFLER, Michael, 87534 Oberstaufen (DE)
(86) Internationale Anmeldenummer: PCT/EP2017/072344
(87) Internationale Veröffentlichungsnummer: WO 2018/046540

(56) Entgegenhaltungen:
- WO-A1-95/01525
- DE-A1- 3 534 665
- DE-A1- 4 313 384
- DE-A1-102006 037 496
- DE-A1-102012 211 340
- DE-A1-102015 117 568
- US-A- 5 967 625

## Beschreibung

Die Erfindung betrifft einen Hydraulikblock für ein Hydraulikaggregat einer Schlupfregelung einer hydraulischen Fahrzeugbremsanlage mit den Merkmalen des Oberbegriffs des Anspruchs 1.

Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind. Solche Schlupfregelungen hydraulischer Fahrzeugbremsanlagen sind von Personenkraftwagen und Krafträdern bekannt und werden hier nicht näher erläutert.

### Stand der Technik

Kernstück solcher Schlupfregelungen ist ein Hydraulikaggregat, das einen Hydraulikblock aufweist, der mit hydraulischen Bauelementen der Schlupfregelung bestückt und durch Bremsleitungen an einen Hauptbremszylinder angeschlossen ist und an den durch Bremsleitungen eine oder mehrere hydraulische Radbremsen angeschlossen sind. Hydraulische Bauelemente sind unter anderem Magnetventile, Hydropumpen (meistens Kolbenpumpen), Rückschlagventile, Hydrospeicher, Dämpferkammern und Drucksensoren. Der Hydraulikblock ist typischerweise ein quaderförmiger Metallblock, der zu einer mechanischen Befestigung und hydraulischen Verschaltung der hydraulischen Bauelemente der Schlupfregelung dient. Verschaltung meint eine hydraulische Verbindung der hydraulischen Bauelemente entsprechend einem hydraulischen Schaltplan der Schlupfregelung.

Der Hydraulikblock weist Aufnahmen für die hydraulischen Bauelemente der Schlupfregelung auf. Dabei handelt es sich üblicherweise um zylindrische, meist durchmessergestufte Ansenkungen, Sack- oder Durchgangslöcher, die im Hydraulikblock angebracht sind und in die die hydraulischen Bauelemente vollständig oder teilweise eingebracht, beispielsweise eingepresst sind. Beispielsweise sind Hydropumpen üblicherweise vollständig in ihre Aufnahmen in einem Hydraulikblock eingebracht, wogegen bei Magnetventilen üblicherweise nur ein hydraulischer Teil in eine Aufnahme eines Hydraulikblocks eingebracht ist und ein elektromagnetischer Teil des Magnetventils aus dem Hydraulikblock vorsteht. Durch eine normalerweise kartesische Verbohrung des Hydraulikblocks sind die Aufnahmen entsprechend dem hydraulischen Schaltplan der Schlupfregelung miteinander verbunden. Kartesisch bedeutet parallel oder rechtwinklig zueinander und zu Flächen und Kanten des Hydraulikblocks im Hydraulikblock angebrachte Bohrungen. Bestückt mit den hydraulischen Bauelementen bildet der Hydraulikblock ein Hydraulikaggregat.

Zu einer Verbindung des Hydraulikblocks mit einem Hauptbremszylinder und zur Verbindung von Radbremsen mit dem Hydraulikblock weisen bekannte Hydraulikblöcke Anschlußbohrungen für Bremsleitungen auf. Die Anschlußbohrungen sind typischerweise zylindrische Ansenkungen bzw. Sacklöcher, die beispielsweise Innengewinde für eine Schraubverbindung mit einem Schraubnippel einer Bremsleitung aufweisen oder gewindelos zum Einpressen und Verstemmen eines Einpressnippels einer Bremsleitung vorzugsweise in sog. self-clinch Technik sind. Self-clinch bedeutet, dass sich der Einpressnippel beim Einpressen in die Anschlussbohrung des Hydraulikblocks unter plastischer Umformung von Material des Hydraulikblocks selbst druckdicht in der Anschlußbohrung des Hydraulikblocks verstemmt.

Die Offenlegungsschrift DE 10 2006 059 924 A1 offenbart einen Hydraulikblock für ein Hydraulikaggregat einer Schlupfregelung einer hydraulischen Fahrzeugbremsanlage, bei dem alle Aufnahmen für Magnetventile der Schlupfregelung in einer Deckseite, die auch als Ventilseite bezeichnet werden kann, eines quaderförmigen Hydraulikblocks angeordnet sind. Die Deckseite ist eine der beiden großen Seiten des quaderförmigen Hydraulikblocks, der nicht würfelförmig ist, sondern länger und breiter als dick. Die Deckseite kann quadratisch oder rechteckig sein.

Zentral in einer Längsmittelebene und versetzt zu einer Quermittelebene des Hydraulikblocks weist der bekannte Hydraulikblock einen Exzenterraum in einer Grundseite auf. Die Grundseite, die auch als Motorseite bezeichnet werden kann, liegt der Deckseite gegenüber und ist kongruent zu ihr. Der Exzenterraum ist eine zylindrische, durchmessergestufte Ansenkung und ist für eine Unterbringung eines Pumpenexzenters vorgesehen, der zum Antrieb zweier Hydropumpen dient. Der Pumpenexzenter wird von einem Elektromotor als Pumpenmotor angetrieben, der außen an der Motorseite des Hydraulikblocks angebracht wird.

Zwei Aufnahmen für Hydropumpen, nämlich Kolbenpumpen, sind radial zum Exzenterraum einander gegenüber in dem bekannten Hydraulikblock angeordnet. Die beiden Aufnahmen für die Hydropumpen sind also in Längsseiten des Hydraulikblocks angeordnet bzw. münden in diesen. Die beiden die Hydropumpen bildenden Kolbenpumpen können auch als Pumpenelemente aufgefasst werden.

Vier Anschlussbohrungen für Bremsleitungen, die zu hydraulischen Radbremsen führen, sind bei dem bekannten Hydraulikblock in einer Querseite und zwei Anschlussbohrungen für Bremsleitungen, die von einem Zweikreis-Hauptbremszylinder kommen, in der Motorseite angebracht.

Die Offenlegungsschrift DE 10 2005 055 057 A1 offenbart einen Hydraulikblock für ein Hydraulikaggregat einer Schlupfregelung einer hydraulischen Fahrzeugbremsanlage, der insgesamt sechs Aufnahmen für Hydropumpen aufweist, und zwar für jeden von zwei Bremskreisen drei Hydropumpen. Die Aufnahmen für die Hydropumpen sind in zwei Ebenen sternförmig mit einem Versatz von 120° um einen Exzenterraum herum angeordnet, so dass jeweils zwei der Aufnahmen schräg in Längsseiten des Hydraulikblocks münden.

Das Patent US 5 967 625 A offenbart einen Hydraulikblock für ein Hydraulikaggregat einer Schlupfregelung einer hydraulischen Fahrzeugbremsanlage mit Einlassventilen und Auslassventilen. In einer schematisierten Schnittdarstellung zeigt die Patentschrift die Einlassventile und die Auslassventile in einander gegenüberliegenden Längsseiten des Hydraulikblocks angeordnet, wobei zwei Einlassventile gleichachsig einander gegenüber und zwei Auslassventile in Längsrichtung zu den Einlassventilen versetzt ebenfalls gleichachsig einander gegenüber in den Längsseiten des Hydraulikblocks angeordnet sind. Weiter in Längsrichtung versetzt sind vier Pumpenelemente sternförmig zueinander angeordnet, wobei zwei der Pumpenelemente gleichachsig einander gegenüber in den Längsseiten und ein drittes Pumpenelement in einer Querseite des Hydraulikblocks angeordnet ist. Das vierte Pumpenelement befindet sich in der schematisierten Schnittdarstellung des US Patents innerhalb des Hydraulikblocks. In einer Querseite des Hydraulikblocks, die der Querseite mit dem dritten Pumpenelement gegenüber liegt, weist der bekannte Hydraulikblock zwei Anschlussbohrungen für Bremsleitungen von einem Hauptbremszylinder und zwei Anschlussbohrungen für Bremsleitungen zu hydraulischen Radbremsen auf. Zwei weitere Anschlussbohrungen für Bremsleitungen zweier weiterer Radbremsen weist der Hydraulikblock einander gleichachsig gegenüber in den beiden Längsseiten zwischen den Einlassventilen und den Auslassventilen auf.

Die Offenlegungsschrift DE 10 2006 037 496 A1 offenbart einen Hydraulikblock für ein Hydraulikaggregat einer Schlupfregelung einer hydraulischen Fahrzeugbremsanlage, der aus gestapelten Keramikplatten zusammengesetzt ist, die durch Hartlöten verbunden sind. Zum Anschluss von Bremsleitungen weist der Hydraulikblock einen L-förmigen Anschlussblock auf, der zwei einander gegenüberliegende Ventilseiten, eine Querseite und einen angrenzenden Teil einer Längsseite des Hydraulikblocks umklammert. Magnetventile und Hydraulikpumpen sind einander gegenüber in zwei äußeren der gestapelten Keramikplatten des Hydraulikblocks angeordnet.

Die internationale Patentanmeldung WO 95/01 525 offenbart einen Hydraulikblock für ein Hydraulikaggregat einer Schlupfregelung einer hydraulischen Fahrzeugbremsanlage, bei dem wie in dem oben erläuterten Patent US 5 967 625 A Einlassventile einander gleichachsig gegenüber und Auslassventile in Längsrichtung des Hydraulikblocks zu den Einlassventilen versetzt einander ebenfalls gleichachsig gegenüber in Längsseiten des Hydraulikblocks angeordnet sind. Durch Bohrungen, die den Hydraulikblock axial zu den Ventilen quer durchsetzen, sind die Einlassventile und die Auslassventile miteinander verbunden.

### Offenbarung der Erfindung

Der erfindungsgemäße Hydraulikblock mit den Merkmalen des Oberbegriffs des Anspruchs 1 ist für ein Hydraulikaggregat einer Schlupfregelung einer hydraulischen Fahrzeugbremsanlage vorgesehen. Der insbesondere quaderförmige Hydraulikblock weist Aufnahmen für Ventile der Schlupfregelung, insbesondere Magnetventile, in zwei einander gegenüberliegenden Seiten auf, die hier als erste Ventilseite und als zweite Ventilseite bezeichnet werden. Dabei sind Aufnahmen für die Einlassventile und Aufnahmen für die Auslassventile der Schlupfregelung in einer Ventilseite, die hier als erste Ventilseite bezeichnet wird, und Aufnahmen für die Trennventile und die Ansaugventile in der gegenüberliegenden Ventilseite angeordnet, die hier als zweite Ventilseite bezeichnet wird.

Durch die Einlassventile und die Auslassventile sind Radbremsen an die Schlupfregelung angeschlossen. Die Einlassventile und die Auslassventile bilden Radbremsdruckmodulationsventilanordnungen, mit denen sich Radbremsdrücke in den Radbremsen radindividuell regeln lassen. Mit den Trennventilen lässt sich ein Hauptbremszylinder während einer Schlupfregelung hydraulisch von der Fahrzeugbremsanlage trennen und durch die Ansaugventile lassen sich Hydropumpen für einen schnellen Aufbau unmittelbar mit dem Hauptbremszylinder oder einem Bremsflüssigkeitsvorratsbehälter verbinden.

Anschlussbohrungen zum Anschluss eines Hauptbremszylinders und hydraulischer Radbremsen mittels Bremsleitungen sind in einer Anschlussseite des Hydraulikblocks angeordnet, die an die beiden Ventilseiten angrenzt.

Pumpenbohrungen zur Aufnahme von Hydropumpen der Schlupfregelung sind einander gegenüber in Pumpenseiten des Hydraulikblocks angebracht, die an die beiden Ventilseiten und an die Anschlussseite angrenzen.

Aufnahmen für Hydrospeicher sind in der zweiten Ventilseite des Hydraulikblocks angeordnet, in der auch die Aufnahmen für die Trennventile und die Ansaugventile angebracht sind.

Vorzugsweise sind die Ventilseiten eine Grundseite und eine Deckseite des Hydraulikblocks. Bei einem Hydraulikblock, der länger und breiter als dick ist, sind die Grundseite und die Deckseite die großen Seiten des Hydraulikblocks. Sie können quadratisch oder rechteckig sein.

Die Anordnung der Aufnahmen für die Ventile der Schlupfregelung in gegenüberliegenden Seiten ermöglicht einen kompakteren, insbesondere in einer Richtung kürzeren, dafür aber eventuell dickeren Hydraulikblock.

Gegenstand der Unteransprüche sind vorteilhafte Ausgestaltungen und Weiterbildungen der im Anspruch 1 angegebenen Erfindung.

Die Aufnahmen für die Ventile sind vorzugsweise in Reihen parallel zu einem Rand der ersten oder der zweiten Ventilseite angeordnet (Anspruch2). Dabei sind insbesondere die Aufnahmen für die Einlassventile in einer Reihe, die Aufnahmen für die Auslassventile in einer Reihe, die Aufnahmen für die Trennventile in einer Reihe und die Aufnahmen für die Ansaugventile in einer Reihe angeordnet, wobei beispielsweise zwei Aufnahmen für Trennventile und zwei Aufnahmen für Ansaugventile gemeinsam in einer Reihe angeordnet sein können (Anspruch 3).

Anders als im Stand der Technik sieht Anspruch 4 einen Exzenterraum für einen Pumpenexzenter zum Antrieb einer oder mehrerer Hydropumpen nicht in einer der Ventilseiten, sondern in einer angrenzenden Seite vor, die hier als Motorseite bezeichnet wird, weil an ihr ein Elektromotor als Pumpenmotor zum Antrieb des Pumpenexzenters angebracht wird. Sind die beiden Ventilseiten die Grundseite und die Deckseite des Hydraulikblocks, dann ist der Exzenterraum in einer Längsseite oder einer Querseite angeordnet, die wie gesagt als Motorseite bezeichnet wird.

Für eine Schlupfregelung mit mehr als einer Hydropumpe je Bremskreis sieht Anspruch 7 eine Aufnahme für eine Hydropumpe in einer an die beiden Ventilseiten angrenzenden Seite, gegebenenfalls eine Aufnahme für eine weitere Hydropumpe in einer gegenüberliegenden Seite und eine Aufnahme für eine Hydropumpe schräg zu den Seiten mit den anderen Aufnahmen für Hydropumpen vor. Sofern die Ventilseiten die Grundseite und die Deckseite des Hydraulikblocks sind, sind die angrenzenden Seiten Längsseiten oder Querseiten. Die Seiten mit den Aufnahmen für die Hydropumpen werden hier als Pumpenseiten bezeichnet. Die Hydropumpen sind insbesondere Kolbenpumpen, sie können auch als Pumpenelemente aufgefasst werden. Diese Ausgestaltung der Erfindung ermöglicht eine raumsparende Anordnung von beispielsweise sechs Aufnahmen für Hydropumpen, von denen jeweils drei einem von zwei Bremskreisen zugeordnet sind.

Unter einer Bohrung ist ein Durchgangsloch oder ein Sackloch unabhängig von der Art seiner Herstellung zu verstehen. Eine Bohrung muss also nicht durch Bohren sondern kann beispielsweise durch Fräsen oder in sonstiger Weise hergestellt sein.

### Kurze Beschreibung der Zeichnung

Die Erfindung wird nachfolgend anhand zweier in der Zeichnung dargestellter Ausführungsformen näher erläutert. Es zeigen:
- Figur 1: einen erfindungsgemäßen Hydraulikblock in perspektivischer Darstellung mit Blick auf eine erste Ventilseite;
- Figur 2: den Hydraulikblock aus Figur 1 in perspektivischer Darstellung mit Blick auf eine gegenüberliegende zweite Ventilseite; und
- Figur 3: eine zweite Ausführungsform eines erfindungsgemäßen Hydraulikblocks mit einer Figur 2 entsprechenden Blickrichtung.

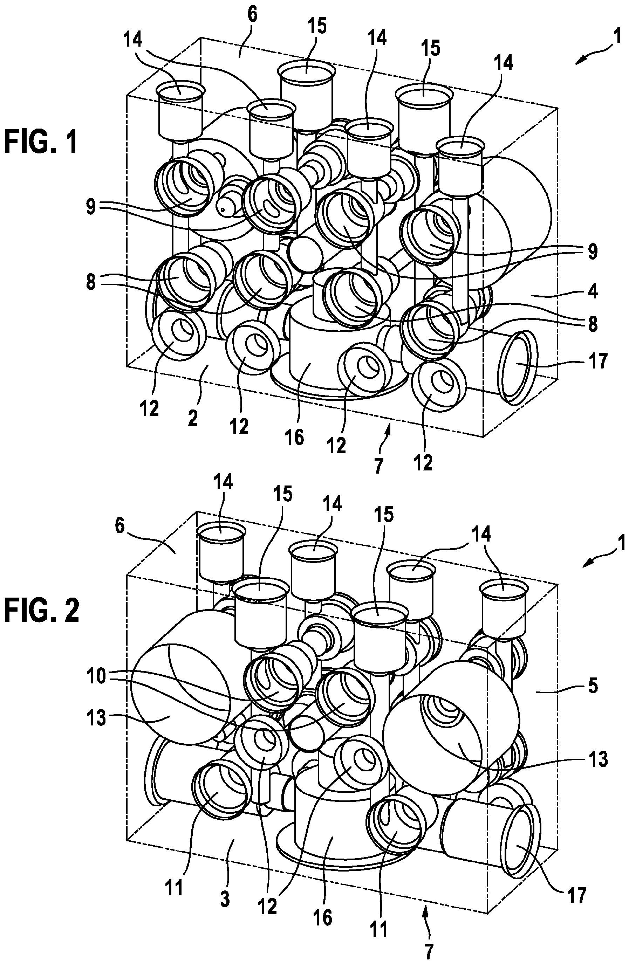

In Figuren 1 und 2 ist der Hydraulikblock durchsichtig gezeichnet um seine Verbohrung zu zeigen.

### Ausführungsformen der Erfindung

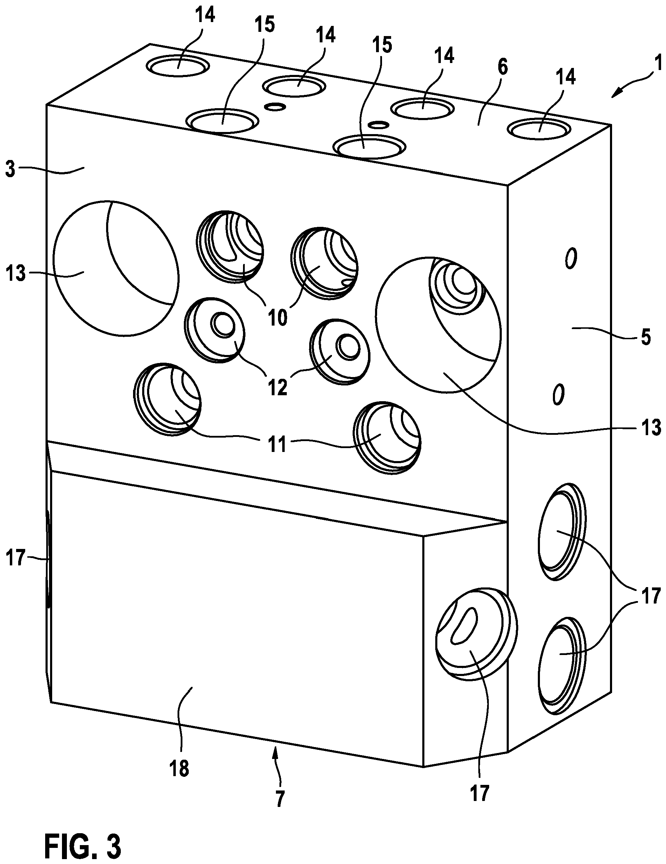

Der in Figuren 1 und 2 durchsichtig gezeichnete, erfindungsgemäße Hydraulikblock 1 ist für ein Hydraulikaggregat einer Schlupfregelung einer im Übrigen nicht dargestellten hydraulischen Fahrzeugbremsanlage vorgesehen. Solche Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind. Der Hydraulikblock 1 ist ein quaderförmiger Metallblock, der in der hier verwendeten Terminologie breiter als lang und länger als dick ist. Er weist eine rechteckige Grundseite und eine kongruente, der Grundseite gegenüberliegende Deckseite, die hier als erste Ventilseite 2 und als zweite Ventilseite 3 bezeichnet werden, zwei einander gegenüberliegende Längsseiten, die hier als erste und zweite Pumpenseite 4, 5, und zwei einander gegenüberliegende Querseiten, die hier als Anschlußseite 6 und als Motorseite 7 bezeichnet werden, auf. Die Ventilseiten 2, 3 sind die größten Seiten des Hydraulikblocks 1. Die Längsseiten müssen nicht länger als die Querseiten sein und sind bei dem in Figuren 1 und 2 gezeichneten Hydraulikblock 1 kürzer (in Figur 3 sind sie länger).

In den beiden Ventilseiten 2, 3 weist der Hydraulikblock 1 Aufnahmen 8, 9, 10, 11 für nicht gezeichnete Magnetventile der Schlupfregelung auf, und zwar in der ersten Ventilseite 2 vier Aufnahmen 8 für Einlassventile und vier Aufnahmen 9 für Auslassventile und in der gegenüberliegenden zweiten Ventilseite 3 zwei Aufnahmen 10 für Trennventile und zwei Aufnahmen 11 für Ansaugventile. Es sind die vier Aufnahmen 9 für die Auslassventile in einer ersten Reihe parallel zur Anschlussseite 6 und die vier Aufnahmen 8 für die Einlassventile in einer zweiten Reihe ebenfalls parallel zur Anschlussseite 6 in der ersten Ventilseite 2 des Hydraulikblocks 1 angebracht. In einer dritten Reihe wieder parallel zur Anschlussseite 6 sind vier Aufnahmen 12 für nicht gezeichnete Drucksensoren der Schlupfregelung der hydraulischen Fahrzeugbremsanlage in der ersten Ventilseite 2 des Hydraulikblocks 1 angebracht.

Die Aufnahmen 8, 9, 10, 11 für die Magnetventile sind zylindrische, durchmessergestufte Ansenkungen im Hydraulikblock 1, in die die nicht dargestellten Magnetventile der Schlupfregelung in sogenannter self-clinch Technik eingepresst werden. Das bedeutet, dass die Magnetventile beim Einpressen Material des Hydraulikblocks 1 plastisch so verformen, dass sie mechanisch gehalten und druckdicht in den Aufnahmen 8, 9, 10, 11 abgedichtet sind. Die Aufnahmen 12 für die Drucksensoren sind niedrige zylindrische Ansenkungen, in die die nicht dargestellten Drucksensoren eingesetzt und druckdicht verstemmt werden.

In der gegenüberliegenden zweiten Ventilseite 3 weist der Hydraulikblock 1 zwei zylindrische Ansenkungen als Aufnahmen 13 für Hydrospeicher auf. Die Aufnahmen 13 für die Hydrospeicher weisen einen größeren Durchmesser auf und sind tiefer als die Aufnahmen 8, 9, 10, 11 für die Magnetventile. Form und Größe sind nicht zwingend für die Aufnahmen 13. Die Aufnahmen 13 für die Hydrospeicher sind ungefähr in einer Quermittelebene, also ungefähr in einer Mitte zwischen der Anschlussseite 6 und der Motorseite 7 im Hydraulikblock 1 angeordnet. Die beiden Aufnahmen 10 für Trennventile sind in der zweiten Ventilseite 3 zwischen den beiden Aufnahmen 13 für die Hydrospeicher und bezüglich deren Mitten etwas in Richtung der Anschlussseite 6 versetzt im Hydraulikblock 1 angeordnet. Die beiden Aufnahmen 10 für die Trennventile sind in gleicher Höhe wie die Aufnahmen 9 für die Auslassventile, d. h. mit gleichem Abstand von der Anschlussseite 6 im Hydraulikblock 1 angeordnet. Die beiden Aufnahmen 11 für die Ansaugventile sind zwischen den Aufnahmen 13 für die Hydrospeicher und der Motorseite 7 angeordnet. Sie sind etwas näher an der Längsmittelebene des Hydraulikblocks 1 als die Aufnahmen 13 für die Hydrospeicher, die nahe an den beiden Pumpenseiten 4, 5 angeordnet sind, und sie sind weiter weg von der Längsmittelebene des Hydraulikblocks 1 als die Aufnahmen 10 für die Trennventile angeordnet. Zwischen den Aufnahmen 11 für die Ansaugventile und den Aufnahmen 13 für die Hydrospeicher sind zwei weitere Aufnahmen 12 für Drucksensoren in der zweiten Ventilseite 3 des Hydraulikblocks 1 angebracht. Sie sind näher an der Längsmittelebene des Hydraulikblocks 1 als die Aufnahmen 11 für die Ansaugventile.

Alle Anschlussbohrungen 14, 15 für Bremsleitungen sind in der Anschlussseite 6 des Hydraulikblocks 1 angebracht. Und zwar sind vier Anschlussbohrungen 14 zum Anschluss nicht gezeichneter, hydraulischer Radbremsen in einer Reihe parallel zu den Ventilseiten 2, 3 und nahe der ersten Ventilseite 2 in der Anschlussseite 6 und zwei Anschlussbohrungen 15 für einen ebenfalls nicht gezeichneten Zweikreis-Hauptbremszylinder symmetrisch zur Längsmittelebene des Hydraulikblocks 1 nahe der zweiten Ventilseite 3 in der Anschlussseite 6 angeordnet. Die Anschlussbohrungen 14, 15 sind zylindrische Ansenkungen mit beispielsweise Innengewinden zu einem Schraubanschluss von Bremsleitungen mit Schraubnippeln oder ohne Innengewinde für einen Anschluss von Bremsleitungen durch Verstemmen. Das Verstemmen kann in sog. Self-Clinch Technik mit speziellen Nippeln erfolgen, die Material des Hydraulikblocks 1 beim Einpressen der Nippel in die Anschlussbohrungen 14, 15 so umformen, dass die Nippel mechanisch gehalten und druckfest in den Anschlussbohrungen 14, 15 abgedichtet sind. Die Anschlussbohrungen 14, 15 müssen nicht durch Bohren, sondern können auch in anderer Weise hergestellt, beispielsweise gefräst sein.

In der Motorseite 7, die der Anschlussseite 6 gegenüber liegt, weist der Hydraulikblock 1 in seiner Längsmitte einen Exzenterraum 16 auf, der in der gezeichneten Ausführungsform der Erfindung eine zylindrische, durchmessergestufte Ansenkung ist, deren Durchmesser größer und die tiefer als die Aufnahmen 8, 9, 10, 11 für die Magnetventile ist. Der Exzenterraum 16 ist zum Einbau und zu einer Drehlagerung eines nicht gezeichneten Pumpenexzenters zum Antrieb zweier Kolbenpumpen als Hydropumpen der Schlupfregelung der nicht gezeichneten hydraulischen Fahrzeugbremsanlage vorgesehen. Angetrieben wird der Pumpenexzenter mit einem nicht gezeichneten Elektromotor als Pumpenmotor gegebenenfalls unter Zwischenschaltung eines mechanischen Untersetzungsgetriebes. Der nicht gezeichnete Elektromotor wird außen an der Motorseite 7 befestigt, weswegen diese Seite des Hydraulikblocks 1 hier als Motorseite 7 bezeichnet wird.

Radial zum Exzenterraum 16 und gleichachsig einander gegenüber sind zwei Pumpenbohrungen 17 im Hydraulikblock 1 angebracht, die an den beiden Pumpenseiten 4, 5 münden. Die Pumpenbohrungen 17 sind zylindrische, durchmessergestufte Löcher, die von den Pumpenseiten 4, 5 zum Exzenterraum 16 durchgehen. Sie sind zum Einbau nicht dargestellter Kolbenpumpen als Hydropumpen der Schlupfregelung der nicht dargestellten hydraulischen Fahrzeugbremsanlage vorgesehen. Typischerweise werden solche Kolbenpumpen in die Pumpenbohrunggen eines Hydraulikblocks eingepresst. Die Pumpenbohrungen 17 müssen nicht durch Bohren, sondern können auch in anderer Weise hergestellt, beispielsweise gefräst sein.

Der Hydraulikblock 1 ist symmetrisch zu einer Längsmittelebene verbohrt, das heißt die Aufnahmen 8, 9, 10, 11, 12, 13 für die hydraulischen Bauelemente der Schlupfregelung und die Aufnahmen verbindende Leitungsbohrungen sind spiegelsymmetrisch zur Längsmittelebene im Hydraulikblock 1 angebracht. Die Längsmittelebene befindet sich in einer Mitte zwischen den beiden Pumpenseiten 4, 5. Einzelne Abweichungen von der Symmetrie sind nicht ausgeschlossen. Bestückt mit den nicht dargestellten Magnetventilen, Hydropumpen und weiteren hydraulischen Bauelementen einer Schlupfregelung einer nicht dargestellten hydraulischen Fahrzeugbremsanlage bildet der Hydraulikblock 1 ein Hydraulikaggregat, das Kernstück eines hydraulischen Teils der Schlupfregelung bildet. Nicht gezeichnete Ventildome der Magnetventile stehen in entgegengesetzten Richtungen von den einander gegenüberliegenden Ventil Seiten 2, 3 vom Hydraulikblock 1 ab.

Im Unterschied zu dem in Figuren 1 und 2 gezeichneten Hydraulikblock 1 weist der Hydraulikblock 1 in Figur 3 nicht zwei - für jeden Bremskreis eine - sondern sechs Pumpenbohrungen 17 auf, nämlich für jeden von zwei Bremskreisen drei Pumpenbohrungen 17. In Figur 3 ist der Hydraulikblock 1 undurchsichtig gezeichnet. Die Blickrichtung in Figur 3 ist die gleiche wie in Figur 2, es ist also die zweite Ventilseite 3 zu sehen. Wegen der zusätzlichen vier Pumpenbohrungen 17 ist der Hydraulikblock 1 aus Figur 3 länger als der Hydraulikblock 1 aus Figuren 1 und 2. Zusätzlich zu den beiden Pumpenbohrungen 17, die der Hydraulikblock 1 aus Figuren 1 und 2 aufweist, weist der Hydraulikblock 1 aus Figur 3 in jeder Pumpenseite 4, 5 eine weitere Pumpenbohrung 17 auf. Diese insgesamt vier Pumpenbohrungen 17 befinden sich alle in einer gedachten Ebene parallel zu und in einer Mitte zwischen den beiden Ventilseiten 2, 3. Die beiden restlichen der insgesamt sechs Pumpenbohrungen 17 sind schräg zu den vier Pumpenbohrungen 17, die in den beiden Pumpenseiten 4, 5 münden, und in einer Längsrichtung des Hydraulikblocks 1 zwischen den 4 Pumpenbohrungen 17 im Hydraulikblock 1 angebracht. Die beiden restlichen Pumpenbohrungen 17 sind ebenfalls radial zum Exzenterraum 16, der in Figur 3 nicht zu sehen ist, angeordnet. Zur Unterbringung der beiden restlichen Pumpenbohrungen 17 weist der Hydraulikblock 1 eine stufenförmige Erhöhung 18 auf der zweiten Ventilseite 3 auf, die einstückiger Bestandteil des Hydraulikblocks 1 oder als ursprünglich separates Teil auf der zweiten Ventilseite 3 angebracht sein kann.

Alle anderen Aufnahmen 8, 9, 10, 11, 12, 13, Anschlussbohrungen 14, 15 und der Exzenterraum 16 sind in dem Hydraulikblock 1 der Figur 3 gleich angeordnet wie in Figuren 1 und 2. Gleiche Elemente sind in allen Figuren mit gleichen Bezugszahlen bezeichnet.

## Patentansprüche

1. Hydraulikblock für ein Hydraulikaggregat einer Schlupfregelung einer hydraulische Fahrzeugbremsanlage, der Aufnahmen (8) für Einlassventile und Aufnahmen (9) für Auslassventile in einer ersten Ventilseite (2) des Hydraulikblocks (1), Pumpenbohrungen (17) zur Aufnahme von Hydropumpen in einander gegenüberliegenden und an die erste Ventilseite (2) angrenzenden Pumpenseiten (4, 5) des Hydraulikblocks (1) und Anschlussbohrungen (14) für Radbremsen in einer Anschlussseite (6) des Hydraulikblocks (1), die an die erste Ventilseite (6) und an die beiden Pumpenseiten (4, 5) angrenzt, aufweist, **dadurch gekennzeichnet, dass** der Hydraulikblock (1) Aufnahmen (10) für Trennventile und Aufnahmen (11) für Ansaugventile in einer der ersten Ventilseite (2) gegenüberliegenden zweiten Ventilseite (3), Anschlußbohrungen (15) für einen Hauptbremszylinder in der Anschlußseite (6) und Aufnahmen (13) für Hydrospeicher in der zweiten Ventilseite (3) aufweist.

2. Hydraulikblock nach Anspruch 1, **dadurch gekennzeichnet, dass** die Aufnahmen (8, 9, 10, 11) für die Einlassventile und/oder die Auslassventile und/oder die Trennventile und/oder die Ansaugventile in parallelen Reihen parallel zu einem Rand der ersten oder der zweiten Ventilseite (2, 3) angeordnet sind.

3. Hydraulikblock nach Anspruch 1, **dadurch gekennzeichnet, dass** der Hydraulikblock (1) vier Aufnahmen für Einlassventile (8) und/oder vier Aufnahmen (9) für Auslassventile in der ersten Ventilseite (2) und/oder zwei Aufnahmen (10) für Trennventile und/oder zwei Aufnahmen (11) für Ansaugventile in der gegenüberliegenden zweiten Ventilseite (3) aufweist.

4. Hydraulikblock nach Anspruch 1, **dadurch gekennzeichnet, dass** der Hydraulikblock (1) einen Exzenterraum (16) für einen Pumpenexzenter zum Antrieb einer Hydropumpe in einer an die erste und die zweite Ventilseite (2, 3) angrenzenden Motorseite (7) aufweist.

5. Hydraulikblock nach Anspruch 1, **dadurch gekennzeichnet, dass** der Hydraulikblock (1) mindestens eine Aufnahme (12) für einen Drucksensor in der ersten oder der zweiten Ventilseite (2, 3) oder mindestens zwei Aufnahmen für Drucksensoren in der ersten und der zweiten Ventilseite (2, 3) aufweist.

6. Hydraulikblock nach Anspruch 1, **dadurch gekennzeichnet, dass** der Hydraulikblock (1) mindestens eine Pumpenbohrung (17) zur Aufnahme einer Hydropumpe aufweist, die schräg zur ersten und zur zweiten Ventilseite (2, 3) im Hydraulikblock (1) angeordnet ist.

7. Hydraulikblock nach Anspruch 1, **dadurch gekennzeichnet, dass** der Hydraulikblock (1) zwei Pumpenbohrungen (17) zur Aufnahme von Hydropumpen in einer ersten, an die erste und die zweite Ventilseite (2, 3) angrenzenden Pumpenseite (4), zwei Pumpenbohrungen (17) zur Aufnahme von Hydropumpen in einer der ersten Pumpenseite (4) gegenüberliegenden zweiten Pumpenseite (5) und zwei Pumpenbohrungen (17) zur Aufnahme von Hydropumpen schräg zur ersten und zur zweiten Pumpenseite (4, 5) aufweist.

8. Hydraulikblock nach Anspruch 1, **dadurch gekennzeichnet, dass** der Hydraulikblock (1) alle Anschlußbohrungen (14, 15) für Bremsleitungen in einer Anschlussseite (6) aufweist.

## Claims

1. Hydraulic block for a hydraulic assembly of a slip control system of a hydraulic vehicle brake system, which hydraulic block comprises receptacles (8) for inlet valves and receptacles (9) for outlet valves in a first valve side (2) of the hydraulic block (1), pump bores (17) for receiving hydraulic pumps in pump sides (4, 5) of the hydraulic block (1), which pump sides are situated opposite one another and adjoin the first valve side (2), and connection bores (14) for wheel brakes in a connection side (6) of the hydraulic block (1), which connection side adjoins the first valve side (6) and the two pump sides (4, 5), **characterized in that** the hydraulic block (1) comprises receptacles (10) for isolation valves and receptacles (11) for intake valves in a second valve side (3) which is situated opposite the first valve side (2), connection bores (15) for a brake master cylinder in the connection side (6), and receptacles (13) for hydraulic accumulators in the second valve side (3).

2. Hydraulic block according to Claim 1, **characterized in that** the receptacles (8, 9, 10, 11) for the inlet valves and/or the outlet valves and/or the isolation valves and/or the intake valves are arranged in parallel rows parallel to an edge of the first or the second valve side (2, 3).

3. Hydraulic block according to Claim 1, **characterized in that** the hydraulic block (1) comprises four receptacles for inlet valves (8) and/or four receptacles (9) for outlet valves in the first valve side (2) and/or two receptacles (10) for isolation valves and/or two receptacles (11) for intake valves in the opposite second valve side(3).

4. Hydraulic block according to Claim 1, **characterized in that** the hydraulic block (1) comprises an eccentric chamber (16) for a pump eccentric for driving a hydraulic pump in a motor side (7) which adjoins the first and the second valve side (2, 3).

5. Hydraulic block according to Claim 1, **characterized in that** the hydraulic block (1) comprises at least one receptacle (12) for a pressure sensor in the first or the second valve side (2, 3) or at least two receptacles for pressure sensors in the first and the second valve side (2, 3).

6. Hydraulic block according to Claim 1, **characterized in that** the hydraulic block (1) comprises at least one pump bore (17) for receiving a hydraulic pump which is arranged obliquely in relation to the first and in relation to the second valve side (2, 3) in the hydraulic block (1).

7. Hydraulic block according to Claim 1, **characterized in that** the hydraulic block (1) comprises two pump bores (17) for receiving hydraulic pumps in a first pump side (4) which adjoins the first and the second valve side (2, 3), two pump bores (17) for receiving hydraulic pumps in a second pump side (5) which is situated opposite the first pump side (4), and two pump bores (17) for receiving hydraulic pumps obliquely in relation to the first and in relation to the second pump side (4, 5).

8. Hydraulic block according to Claim 1, **characterized in that** the hydraulic block (1) comprises all connection bores (14, 15) for brake lines in a connection side (6).

## Revendications

1. Bloc hydraulique pour un groupe hydraulique d'une régulation antipatinage d'une installation de freinage hydraulique d'un véhicule, qui présente des logements (8) pour des soupapes d'entrée et des logements (9) pour des soupapes de sortie dans un premier côté soupape (2) du bloc hydraulique (1), des alésage de pompe (17) pour recevoir des pompes hydrauliques dans des côtés pompe (4, 5) du bloc hydraulique (1) opposés l'un à l'autre et adjacents au premier côté soupape (2) et des alésages de raccordement (14) pour des freins de roue dans un côté raccordement (6) du bloc hydraulique (1), qui est adjacent au premier côté soupape (6) et aux deux côtés pompe (4, 5), **caractérisé en ce que** le bloc hydraulique (1) présente des logements (10) pour des soupapes de coupure et des logements (11) pour des soupapes d'admission dans un deuxième côté soupape (3) opposé au premier côté soupape (2), des alésages de raccordement (15) pour un cylindre de frein principal dans le côté raccordement (6) et des logements (13) pour des accumulateurs hydrauliques dans le deuxième côté soupape (3).

2. Bloc hydraulique selon la revendication 1, **caractérisé en ce que** les logements (8, 9, 10, 11) pour les soupapes d'entrée et/ou les soupapes de sortie et/ou les soupapes de coupure et/ou les soupapes d'admission sont disposés dans des rangées parallèles parallèlement à un bord du premier ou du deuxième côté soupape (2, 3).

3. Bloc hydraulique selon la revendication 1, **caractérisé en ce que** le bloc hydraulique (1) présente quatre logements pour des soupapes d'entrée (8) et/ou quatre logements (9) pour des soupapes de sortie dans le premier côté soupape (2) et/ou deux logements (10) pour des soupapes de coupure et/ou deux logements (11) pour des soupapes d'admission dans le deuxième côté soupape opposé (3).

4. Bloc hydraulique selon la revendication 1, **caractérisé en ce que** le bloc hydraulique (1) présente un espace d'excentrique (16) pour un excentrique de pompe pour l'entraînement d'une pompe hydraulique dans un côté moteur (7) adjacent au premier et au deuxième côté soupape (2, 3).

5. Bloc hydraulique selon la revendication 1, **caractérisé en ce que** le bloc hydraulique (1) présente au moins un logement (12) pour un capteur de pression dans le premier ou le deuxième côté soupape (2, 3) ou au moins deux logements pour des capteurs de pression dans le premier et le deuxième côté soupape (2, 3).

6. Bloc hydraulique selon la revendication 1, **caractérisé en ce que** le bloc hydraulique (1) présente au moins un alésage de pompe (17) pour recevoir une pompe hydraulique qui est disposée obliquement par rapport au premier et au deuxième côté soupape (2, 3) dans le bloc hydraulique (1).

7. Bloc hydraulique selon la revendication 1, **caractérisé en ce que** le bloc hydraulique (1) présente deux alésages de pompe (17) pour recevoir des pompes hydrauliques dans un premier côté pompe (4) adjacent au premier et au deuxième côté soupape (2, 3), deux alésages de pompe (17) pour recevoir des pompes hydrauliques dans un deuxième côté pompe (5) opposé au premier côté pompe (4) et deux alésages de pompe (17) pour recevoir des pompes hydrauliques obliquement par rapport au premier et au deuxième côté pompe (4, 5).

8. Bloc hydraulique selon la revendication 1, **caractérisé en ce que** le bloc hydraulique (1) présente tous les alésages de raccordement (14, 15) pour des conduites de frein dans un côté raccordement (6).
